Europäisches Patentamt

European Patent Office

Office européen des brevets

(19)

(11) Veröffentlichungsnummer: **0 027 276**
**A2**

# (12) EUROPÄISCHE PATENTANMELDUNG

(21) Anmeldenummer: **80106228.2**

(22) Anmeldetag: **13.10.80**

(51) Int. Cl.³: **F 16 L 9/00**
**F 16 L 9/22, F 16 L 59/06**
**F 16 L 59/14, F 24 F 13/02**
**H 02 G 3/04, E 04 F 17/02**

(30) Priorität: **13.10.79 DE 2941561**
**05.04.80 DE 3013387**

(43) Veröffentlichungstag der Anmeldung:
**22.04.81 Patentblatt 81/16**

(84) Benannte Vertragsstaaten:
**BE DE FR GB IT NL SE**

(71) Anmelder: **Lüchtrath, Bern**
**Ebertsklinge 22**
**D-8700 Würzburg(DE)**

(72) Erfinder: **Lüchtrath, Bern**
**Ebertsklinge 22**
**D-8700 Würzburg(DE)**

(74) Vertreter: **Pätzold, Herbert, Dr.-Ing.**
**Mühlthaler Strasse 102**
**D-8000 München 71(DE)**

(54) **Transportabler Kanalabschnitt.**

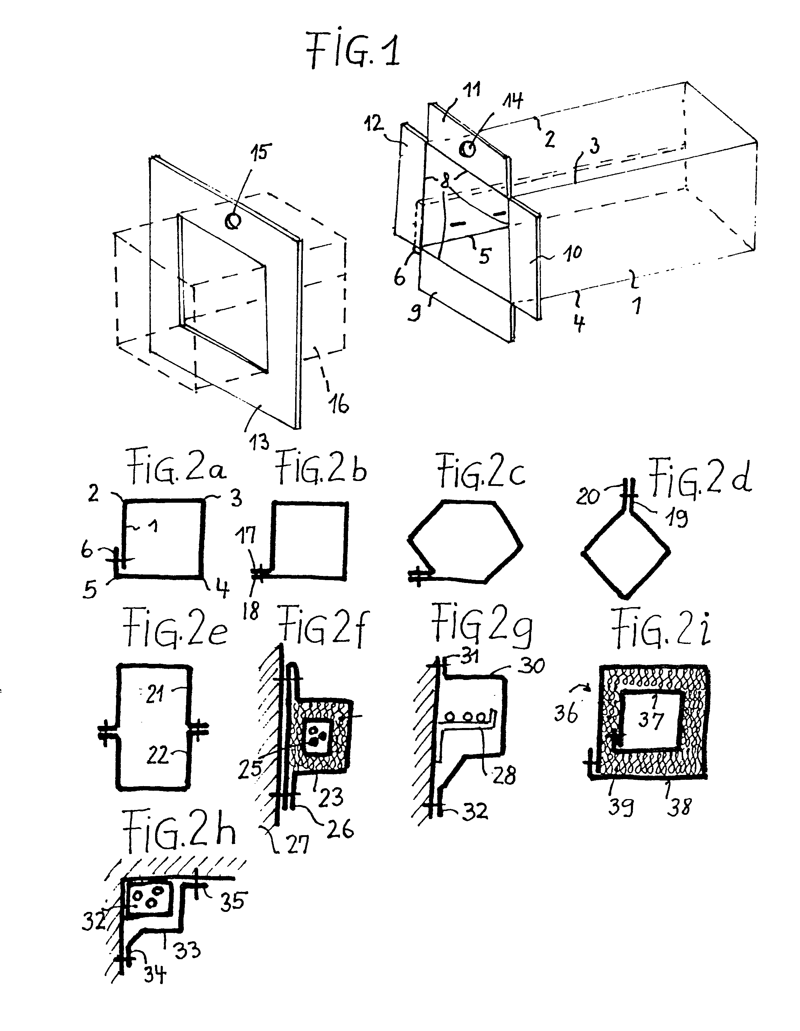

(57) Transportabler, in Längsrichtung offener oder geschlossener Kanalabschnitt (1), insbesondere für feuersichere Luftleitungen von Heizungs- oder Klimaanlagen oder für feuersichere Verkleidungen von Installationsschächten und -kanälen oder von auf Pritschen (28) gehaltenen elektrischen Kabelsträngen. Die einzelnen Kabelabschnitte bestehen aus wenigstens einem ein- oder mehrschichtigen pappe- oder kartonartigen Flachmaterialzuschnitt (40, 44, 46, 49, 55), der auf wenigstens einer Seite mit schmalen, rillen- oder nutenartigen Materialverformungen (43, 45, 50, 59) nach Art von Falzen mit biegeelastischen Eigenschaften zum Aufklappen des Flachmaterialzuschnittes in die räumliche Gestalt des Kanalabschnittes (Fig. 2a bis 2i) oder eines Teiles hiervon versehen ist.

EP 0 027 276 A2

Transportabler Kanalabschnitt

---

Die Erfindung betrifft einen transportablen, in Längsrichtung offenen oder geschlossenen Kanalabschnitt mit hoher Feuersicherheit, insbesondere für Luftleitungen von Heizungs- und Klimaanlagen oder für Verkleidungen von Gebäudeinstallationen. Bei den Gebäudeinstallationen kann es sich um Installationsschächte und -kanäle oder um Kabelpritschen handeln, die elektrische Kabelstränge tragen und die an Gebäudewänden verlegt sind.

Luft- bzw. Lüftungsleitungen in Form von Rohren, Kanälen, Schächten werden vielfach aus Blech, vorzugsweise aus verzinktem Stahlblech hergestellt. Im einzelnen setzt man diese Leitungen aus einzelnen Blechtafeln zusammen, die entsprechend den jeweiligen Anforderungen unterschiedliche Formen und Querschnitte aufweisen. Aus Kostengründen werden die Blechtafeln in Werkstätten und nicht am Einbauort zusammengeschweißt, so daß beim Transport der vorgefertigten Kanalabschnitte viel Raum beansprucht wird. Die Blechbauweise ist jedoch auch deswegen teuer und unwirtschaftlich, weil Luftleitungen der hier betreffenden Art in aller Regel nur geringen mechanischen Beanspruchungen ausgesetzt sind.

Durch die DE-PS 2 112 278 ist zwar schon ein transportabler Kanalabschnitt für Luftkanäle bekannt geworden, bei dem die aus einzelnen Blechtafeln bestehenden Kanalwände durch Blechscharniere gelenkig miteinander verbunden sind, so daß ein Zusammenklappen des vorgefertigten Kanalabschnittes möglich ist.

-2-

Abgesehen davon, daß luftdichte Blechscharniere sehr teuer sind, ist ihr genügend fester und luftdichter Anschluß an die einzelnen Blechtafeln nur mit einem erheblichen Aufwand zu verwirklichen, so daß der Vorteil des geringen Platzbedarfs beim Transport zum Einbauort im zusammengeklappten Zustand wieder verloren geht. Die Verwendung von Kunststoffscharnieren statt Metallscharnieren sind wegen ihrer leichten Brennbarkeit und geringen Hitzebeständigkeit in vielen Fällen aus Sicherheitsgründen nicht zulässig. Die bekannten zusammenklappbaren Blechkanalabschnitte haben sich daher in der Praxis nicht durchsetzen können.

Durch die DE-AS 20 36 259 ist schon ein Luftkanal zum Belüften oder Entlüften von klimatisierten Räumen vorgeschlagen worden, der einen Aufbau aus Blechplatten vermeidet und aus einzelnen nicht brennbaren Isolierplatten zusammengesetzt ist, die aus Asbest-Silikat-Platten bestehen, welche auf der dem Luftkanal zugewandten Oberfläche mit einer Aluminiumfolie kaschiert sind.

Zur Kaschierung wird ein Wasserglaskleber verwendet. Die Stoßkanten der einzelnen Isolierplatten sind luftdicht verkittet. Der Kitt besteht aus einem Wasserglaskleber mit Asbest-Silikatfüller.

Die bekannten Asbestplattenluftkanäle besitzen bereits eine hohe Feuersicherheit, sind aber nur mit erheblichem Aufwand zu fertigen. Werden diese Luftkanäle im Herstellungsbetrieb vormontiert, dann wird auch hier, wie bei den vorgefertigten nicht zusammenklappbaren Kanalabschnitten aus Blech ein erheblicher Transportraum benötigt.

Durch die GB-PS 957 709 ist noch ein weiterer Luftkanal bekannt geworden, der aus mehreren koaxialen Rohren aus textilem Fasermaterial besteht, die durch Wellpappen auf Abstand voneinander gehalten werden. Die Herstellung dieses bekannten mehrschichtigen Luftkanals erfolgt durch herkömmliche Wickel-

- 3 -

techniken, die einen erheblichen Aufwand darstellen. Für
Installationsverkleidungen werden vielfach leicht brennbare
Kunststoffe verwendet, über die Brände leicht von Raum zu
Raum übertragen werden können. Außerdem entstehen beim Verbrennen der Verkleidungen und der dann freiliegenden Kabelisolierungen giftige Gase, die die Rettungschancen für vom
Brand bedrohte Personen erheblich verringern können. Zu
solchen Gasen gehören auch Chlorgase, die im Kontakt mit
Wasser, vor allem Löschwasser, chlorige Säuren bilden, welche
unkontrolliert in das Mauerwerk des von dem Brand heimgesuchten Gebäudes einsickern und dort an den Eisenbewehrungen erheblichen Schaden verursachen können, so daß die Sicherheiten
für die erforderlichen statischen Festigkeiten verloren gehen
können.

Die vorstehend erwähnten bekannten Asbestplattenluftkanäle
für erheblich große Querschnitte, sind als Verkleidungen für
Installationsschächte und -kanäle oder als Verkleidungen für
Kabelpritschen mit vergleichsweise relativ kleinen Abmessungen
nicht ohne weiteres geeignet.

Aufgabe der Erfindung ist es, einen transportablen Kanalabschnitt der eingangs genannten Art anzugeben, der vielseitig,
insbesondere für Luftkanäle und als Installationsverkleidungen
mit jeweils hohen Anforderungen an die Feuersicherheit verwendbar ist, gegebenenfalls am Montageort mit vergle-ichsweise
geringem Herstellungsaufwand vorgefertigt werden kann, um
beim Transport zum Einbauort wenig Platz zu beanspruchen, am
Einbauort auf einfache Weise rasch zu den erforderlichen Einbaueinheiten zusammengesetzt und an den vorgegebenen Befestigungsorten leicht angebracht werden kann, ganz gleich, ob es
sich z.B. um Luftkanäle oder um Installationsverkleidungen
handelt.

Die Aufgabe wird erfindungsgemäß dadurch gelöst, daß der Kanalabschnitt aus wenigstens einem länglichen papp- oder kartonartigen Flachmaterialzuschnitt mit oberflächlichen schmalen,
rillen- oder nutartigen Materialverformungen zur Bildung von
Falzen mit biegeelastischen Materialeigenschaften zum Auffalten des Flachmaterialzuschnittes in die Gestalt des Kanalabschnittes oder einer Teilgestalt hiervon besteht.

Unter papp- oder kartonartigem Flachmaterial wird nicht nur ein
ausreichend steifer Karton oder eine Pappe, z.B. wellpappe aus
Holzfasern, verstanden, aus denen erfindungsgemäß ein in sich
selbst stabiler Luftkanal oder eine Installationsverkleidung
gefaltet werden kann, sondern auch vergleichbar stabile pappe-
oder kartonartige bzw. pappe- oder kartonähnliche Materialien,
die außer oder anstatt Holzfasern jede andere Art von Fasern
oder Fasergemischen enthalten können.

Solche pappe- oder kartonartigen Flachmaterialien können eine
für Luftkanäle und Installationsverkleidungen ausreichend hohe
Feuersicherheit besitzen. Hierunter wird eine Feuerwiderstandsdauer von 30 Minuten bei einer Temperatur von 500$^\circ$C, vorzugsweise
von 900$^\circ$C verstanden, ohne daß die Luftkanäle oder die Installationsverkleidungen Feuer fangen.

Zu solchen, für den erfindungsgemäßen Kanalabschnitt verwendbaren, feuersicheren Materialien gehören nicht-brennbare Fasern,
z.B. Asbestfasern, Keramikfasern, Glasfasern oder Fasern aus
anderen Mineralstoffen (z.B. Basaltwolle, Steinwolle) oder aus
einer Mischung der vorstehend genannten Fasern. Ferner enthalten
solche karton- und pappeartigen Stoffe Füllstoffe und Bindemittel
aus nicht brennbaren Substanzen, wie sie z.B. in der Zeitschrift
"Materialprüfung" Nr. 2, 20. Februar 1963, Seiten 50, 51 genannt
sind.

Vorteilhafte Ausführungen nach der Erfindung sowie vorteilhafte Weiterbildungen der Erfindung können den Merkmalen der Unteransprüche und/oder der nachfolgenden Beschreibung entnommen werden.

Gemäß einer Ausführung nach der Erfindung können die biegeelastischen Eigenschaften der Falze des Flachmaterialzuschnittes allein durch oberflächliche Pressungen, Kerbungen, und/oder Ritzungen des Flachmaterials gebildet sein, die das strömungsmitteldichte Flachmaterial nicht durchdringen. Hierbei kann es sich z.B. um einen ein- oder beidseitig mit einer Aluminiumfolie beschichteten Karton oder eine Pappe, z.B. eine Wellpappe, handeln.

Die biegeelastischen Eigenschaften der Falze können aber nach einer weiteren Ausführung der Erfindung auch durch nicht brennbare biegeelastische Fäden, Fasern, Bänder oder dünne Drähte gebildet oder gesichert sein, die quer zu den Falzen verlaufen und im festen Verbund mit dem Flachmaterial sind. Vorteilhafterweise sind die Fäden, Fasern, Bänder oder dünnen Drähte oder eine Kombination hiervon netz- oder gitterartig miteinander verbunden. Jene Netze und Gitter können im Flachmaterial eingebettet und/oder mit wenigstens einer Seite des Flachmaterials fest verbunden sein. Es kann sich dabei um metallische und/oder keramische und/oder kunststoffartige Netze oder Gitter handeln.

Nach einer noch weiteren Ausführung nach der Erfindung können die biegeelastischen Eigenschaften der Falze durch wenigstens eine nicht brennbare biegeelastische Folie gebildet oder gesichert sein, die im Flachmaterial eingebettet ist und/oder auf wenigstens einer Seite des Flachmaterials aufkaschiert ist. Vorteilhafterweise besitzt die aufkaschierte Folie eine glatte strömungsmitteldichte Oberfläche mit einem niedrigen Strömungswiderstand.

Nach noch weiteren Ausführungen der Erfindung können die vorstehenden biegeelastischen Eigenschaften der Falze durch oberflächliche Materialpressungen, -kerbungen und/oder -ritzungen in Kombination mit den biegeelastischen Fäden, Fasern, Bändern oder dünnen Drähten und/oder mit den biegeelastischen Folien gebildet sein.

Zum Beispiel Asbestkartons oder eine Asbestpappe oder dergleichen keramische Flachmaterialien, die beim Auffalten entlang Falzen nicht ausreichend biegeelastisch sind und daher leicht brechen, können somit nach den vorstehenden Ausführungen entlang ihren Falzen vorteilhafterweise noch eine ausreichende Biegeelastizität erhalten, wenn in ihnen und/oder an wenigstens einer ihrer Oberflächen wenigstens eine biegeelastische Folie und/oder ein fadenartiges Netz oder dergleichen Gitter angeordnet und im festen Verbund mit dem Flachmaterial ist.

Die Folien können aus Metall, vorzugsweise Aluminium oder auch aus schwer entflammbarem Kunststoff oder Papier bestehen. Folien, die nur zur Erhöhung der biegeelastischen Eigenschaften der Falze erforderlich sind und nicht auch zur weitgehenden Erniedrigung der Strömungswiderstände innerhalb der Luftkanäle notwendig sind, können auch außerhalb der Falze Durchbrechungen aufweisen, um dadurch den Verbund zwischen der Folie und dem Flachmaterial zu erhöhen. Brüche des Flachmaterials entlang den Falzen werden durch die biegeelastischen Folien überbrückt und damit auch abgedichtet.

Erfindungsgemäße Kanalabschnitte lassen sich für Luftleitungen und für Verkleidungen von Installationsschächten und -kanälen oder von auf Kabelpritschen gehaltenen elektrischen Kabelsträngen angeben. Vorteilhafterweise können die flachen Zuschnitte für die Kabelabschnitte in Fertigungsbetrieben hergestellt und in der flachen noch nicht aufgefalteten Form wegen des geringen Raumbedarfs billig transportiert werden. Am Einbauort lassen sich die Zuschnitte leicht in die vorgegebene

- 7 -

Form der Kanalabschnitte bzw. der Installationsverkleidungen auffächern. Die Kanalabschnitte für die Luftleitungen besitzen andere Zuschnitte als die Kanalabschnitte für Installationsverkleidungen. Beiden gemeinsam ist, daß die jeweiligen Zuschnitte rillen- oder nutenartige Materialverdichtungen aufweisen, wodurch Falze mit biegeelastischen Eigenschaften gebildet sind, entlang denen Zuschnitte aufgefaltet werden.

Die Zuschnitte für Luftkanalabschnitte werden entlang in Längsrichtung übereinanderliegender schmaler Randzonen vorzugsweise mit Metallklammern zusammengeheftet. Damit die aufgefalteten und längsseitig zusammengehefteten Luftkanalabschnitte in ihrer vorbestimmten Form fixiert werden können, bieten sich erfindungsgemäß verschiedene einfache Möglichkeiten an. So kann der Zuschnitt an seinem einen längsseitigen Ende kurze Einschnitte entlang parallelen Längsfalzen besitzen. Die Einschnitte reichen bis zu einer Querfalz, entlang derer Flachmaterialabschnitte aus-knickbar sind. Von diesen ausgeknickten, vom Kanalabschnitt nach außen abstehenden Fixierungsteilen brauchen nur zwei benachbarte Teile miteinander fest verbunden werden. Hierzu können Metallklammern ausreichen. Vorteilhafterweise ist ein rahmenartiges Flachteil vorhanden, das mit den Fixierungsteilen am einen Ende eines Luftkanalabschnittes, z.B. durch Metallklammern fest verbunden wird. Sollen zwei oder mehrere gleichartige Luftkanalabschnitte zu einer Luftleitung miteinander verbunden werden, so kommt jeweils ein rahmenartiges Flachteil zwischen den gegenüberliegenden Fixierungsteilen zweier benachbarter Kanalabschnitte zu liegen, und durch Heften mittels Metallklammern werden die Fixierungsteile an dem gemeinsamen rahmenartigen Flachteil befestigt, wobei zwei Kanalabschnitte ausgesteift und außerdem miteinander verbunden sind. Schließlich kann das rahmenartige Flachteil und/oder zwei gegenüberliegende Fixierungsteile zur Aufhängung mehrerer miteinander verbundener Luftkanalabschnitte ausgebildet sein. Statt des rahmenartigen Flachteiles zum Aussteifen und Verbinden von Luftkanalabschnitten kann
auch ein kurzer hülsenartiger Körper, z.B. aus Metall, vorgesehen sein, der statt in den offenen Raum am einen Ende
eines Luftkanals eingreift. Der hülsenartige Körper kann
sehr dünn ausgebildet sein, so daß er praktisch keinen Strömungswiderstand bietet. Um zwei Luftkanalabschnitte mit demselben hülsenartigen Körper auszusteifen und auch teilweise
zu verbinden, werden die Kanalabschnitte von zwei Seiten auf
den hülsenartigen Körper aufgeschoben. Zum festen Anschluß
der beiden Kanalabschnitte untereinander werden die sich gegenüberliegenden, ausgeknickten Fixierungsteile unmittelbar miteinander verbunden. Es ist dem Fachmann klar, daß sich hier
eine Vielfalt von Möglichkeiten zum Fixieren und Verbinden
der Kanalabschnitte bieten die hier nicht alle aufgezeigt
werden müssen. Es wird lediglich noch erwähnt, daß an dem hülsenartigen Körper auch ein mittlerer flanschartiger Ring
vorhanden sein kann, der die Funktion des rahmenförmigen Flachteiles übernimmt.

Ein Luftkanalabschnitt nach der Erfindung kann zum Aufbau
einer wärmeisolierten Luftleitung auch doppelwandig mit einem
zwischenliegenden wärmedämmenden Material, insbesondere eine
nicht brennbare Wolle oder ein nicht brennbarer Filz, z.B. aus
Basalt oder Steinwolle, ausgebildet sein. Hierzu ist ein erster
Zuschnitt für einen inneren Kanalabschnitt und ein zweiter
größerer Zuschnitt für einen äußeren, den inneren Kanalabschnitt
umfassenden Kanalabschnitt vorgesehen. Der freie Hohlraum zwischen den beiden koaxialen Kanalabschnitten ist von einem wärmedämmenden Material ausgefüllt. Dieses kann auf die Außenseite
des inneren und/oder auf die Innenseite des äußeren Kanalabschnittes aufkaschiert sein.

Der Querschnitt der Luftkanalabschnitte ist jeweils eckig ausgebildet. Die Anzahl der Ecken kann beliebig gewählt werden.
Vorzugsweise sind die Luftkanalabschnitte rechteckig ausgebildet. Es lassen sich aber ohne Schwierigkeiten z.B. auch sechs- und achteckige Luftkanalquerschnitte angeben.

Die erfindungsgemäßen Verkleidungskanalabschnitte können längsseitig offen oder geschlossen sein. Befinden sich Halterunden für elektrische Kabelstränge an einer Gebäudeinnenwand, so können die Kabelstränge durch offene Verkleidungsabschnitte abgedeckt werden, die z.B. einen V- oder U-förmigen Querschnitt aufweisen und die mittels abgeklappten schmalen randnahen Längsstreifen an der Wand, z.B. mittels Metallklammern, befestigt werden. Zur Feuersicherung kann an der Innenseite der Verkleidungskanäle ein Dämmaterial aufkaschiert sein, das dann den Kabelstrang schützend umgibt. Sofern ein in einem Kunststoffrohr verlegter Kabelstrang allseitig von Dämmmaterial umschlossen sein soll, wird vorteilhafterweise ein Zuschnitt für einen geschlossenen, innenseitig mit dem Dämmaterial kaschierter Verkleidungskanalabschnitt gewählt, der in Längsrichtung eine Basisfläche aufweist, die beidseitig über den Hohlraum zur Aufnahme des Kabelstranges flanschartig hinausragt, entlang der der Verkleidungskanal an einer Wand oder einer Decke z.B. durch Metallklammern schnell und einfach befestigt werden kann. Die einzelnen Verkleidungsrohrabschnitte werden vorteilhafterweise über muffenartige Rohrstücke miteinander verbunden, die mit ihren beiden Enden satt in die Ausnehmungen gegenüberliegender Rohrabschnitte eingreifen.

Die Erfindung wird ohne jede Beschränkung lediglich anhand von einigen Ausführungsbeispielen beschrieben, die den Erfindungsrahmen in keiner Weise beschränken sollen und die in der Zeichnung schematisch dargestellt sind. Hierin zeigt bzw. zeigen

Fig. 1    eine perspektivische Ansicht eines Luftkanalabschnittes nach der Erfindung mit einem Versteifungsrahmen vor diesem Kanalabschnitt,

Fig. 2a bis 2i  Querschnitte durch erfindungsgemäße Kanalabschnitte, die teils Luftkanalabschnitte teils
Installationsverkleidungskanalabschnitte sind und

Fig. 3a bis 3 Querschnitte durch Teile von karton- oder pappeartigen Flachmaterialzuschnitten zur Auffaltung in erfindungsgemäße Kanalabschnitte.

Es ist klar, daß zum Anschließen zweier gleichartiger Kanalabschnitte 1 aneinander, das Rahmenteil 13 zwischen den stirnseitig gegenüberliegenden Fixierungsteilen der beiden Kanalabschnitte zu liegen kommt. Zum zusätzlichen Verbinden zweier Kanalabschnitte kann der Rahmenteil mit einem starren Rohrteil 16 verbunden sein, das nur gestrichelt in Fig. 1 angedeutet ist und das mit seinen beiden Enden satt in die gegenüberliegenden stirnseitigen Öffnungen zum Verbinden der beiden Kanalabschnitte eingreift.

Die Fig. 2a bis 2i zeigen verschiedene Querschnitte durch erfindungsgemäße Kanalabschnitte. Fig. 2a zeigt einen längsseitig geschlossenen rechteckigen Kanalabschnitt gemäß Fig. 1. Fig. 2b zeigt eine ähnliche Ausführung, in der Randabschnitte 17, 18 des betreffenden Zuschnitts miteinander verbunden sind, die seitlich nach außen abstehen. Hierdurch kann eine Verbindung der Randabschnitte vereinfacht sein. Fig. 2c zeigt eine ähnliche Ausführung wie Fig. 2b, nur handelt es sich hier um einen sechseckigen Kanalabschnitt. Fig. 2d zeigt eine weitere Ausführung ähnlich der nach Fig. 2b, wobei jedoch die beiden miteinander verklammerten Randabschnitte 19, 20 in einer diagonalen Ebene durch den Kanalabschnitt liegen. Die beiden Randabschnitte 19 und 20 dienen hier z.B. auch zum Aufhängen der Kanalabschnitte an einer Decke. Fig. 2e zeigt einen zweiteiligen, längsseitig geschlossenen Kanalabschnitt, wobei die offenen einteiligen Abschnitte 21, 22 jeweils U-förmig ausgebildet sind. Fig. 2f zeigt einen Querschnitt durch einen geschlossenen Verkleidungsrohrabschnitt 23 mit einem innenliegenden Kunststoffrohr 24 zur Aufnahme eines Kabelstanges 25, das von einem Dämmaterial 26 umgeben ist, welches auf die Innenwand des Kanalabschnittes kaschiert ist. Der Kanalabschnitt 23 besitzt eine verbreiterte Basis 26 zum seitlichen Befestigen des Kanalabschnittes mit dem innenliegenden
Kabelkunststoffrohr an einer Wand 27.

Fig. 2g zeigt eine Kabelpritsche 28, die an der Gebäudewand 29
fest ist. Ein offener U-förmiger Kanalabschnitt 30 ist über
die Kabelpritsche mit dem von ihr gehaltenen Kabelstrang gestülpt und mittels schmalen Randleisten 31 und 32 an der Wand
29 befestigt. Fig. 2h zeigt eine ähnliche Ausführung zur
Verkleidung eines in einer Gebäudeecke verlegten Kabelstranges
32, der von einem V-förmigen Kanalabschnitt 33 abgedeckt ist,
welcher mittels seitlichen Randleisten 34 und 35 an den in
der Gebäudeecke aufeinanderstoßenden Wänden befestigt ist.
Fig. 2e zeigt einen Querschnitt durch einen doppelwandigen
Luftkanalabschnitt, der aus einem inneren Kanalabschnitt 37
entsprechend Fig. 2a und einem äußeren größeren Kanalabschnitt
38 ebenfalls entsprechend Fig. 2a besteht, welcher den inneren
Kanalabschnitt 37 umgibt. Der freie Zwischenraum ist von
einem wärmedämmenden Material 39, z.B. eine Steinwolle,
ausgefüllt, die als Isolierschicht auf die Innenseite des
äußeren Kanalabschnittes 38 oder die Außenseite des inneren
Kanalabschnittes 37 aufkaschiert ist. Es können auch Schichthälften des wärmedämmenden Materials auf der Innenseite des
äußeren Kanalabschnittes 38 und der Außenseite des inneren
Kanalabschnittes 37 aufkaschiert sein.

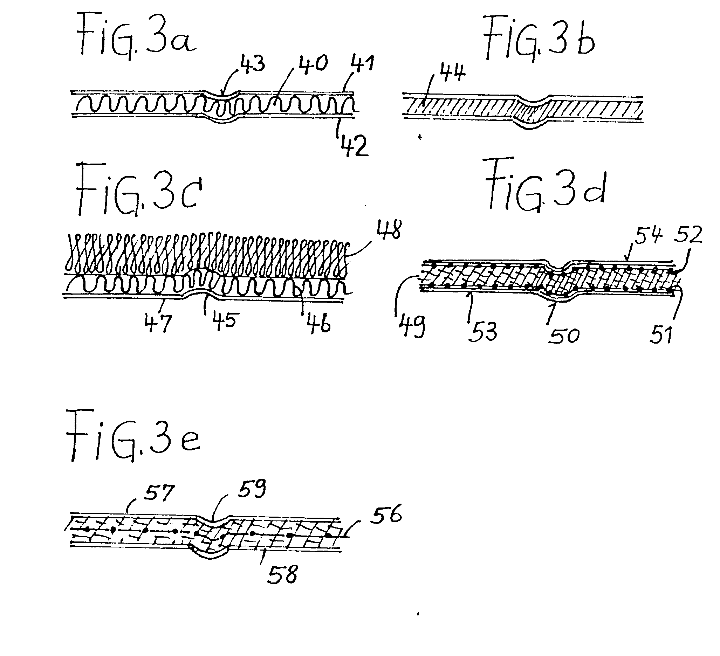

Fig. 3a bis 3e zeigen noch Querschnitte durch Teile von beispielsweisen Flachmaterialzuschnitten, aus denen erfindungsgemäße Kanalabschnitte hergestellt werden. Fig. 3a ist eine
Wellpappe 40, die beidseitig mit Aluminiumfolien 41, 42 kaschiert ist. Mit 43 ist ein Falz dargestellt. Fig. 3b zeigt
eine ähnliche Ausführung, bei der die Wellpappe durch einen
Karton 44 ersetzt ist. Fig. 3c zeigt einen Teil eines Flachmaterialzuschnittes mit einer Falz 45. Hierbei handelt es
sich um eine Wellpappe 46, die auf ihrer einen Seite mit
einer Aluminiumfolie 47 und auf ihrer anderen Seite mit einer
wärmedämmenden Schicht 48 kaschiert ist. Fig. 3d zeigt einen

Asbestkarton 49 mit einer Falz 50. Beidseitig des Kartons 49 sind z.B. dünne elastische Drahtnetze 51, 52 aufgebracht, die mit dem Karton im festen Verbund sind. Die Drahtnetze sind durch Aluminiumfolien 53, 54 abgedeckt, die auf dem Karton fest aufkaschiert sind. Durch die Drahtnetze 51 und 52 in Verbindung mit den beiden Folien 53, 54 erhält die Falz 50 biegeelastische Eigenschaften, wodurch auch ein sprödes nicht biegeelastisches Material, wie ein Asbestkarton 49, entlang der Falz 50 faltbar wird. Fig. 3e zeigt noch einen Asbestkarton 55, der in seiner Mittelfaser z.B. mit einem elastischen Drahtnetz 56 versehen ist. Außenseitig ist auf den Karton je eine Aluminiumfolie 57, 58 kaschiert. Ein Falz 59 in dem Karton 55 erhält durch das Drahtnetz 56 und die beiden Aluminiumfolien 57, 58 seine elastischen Eigenschaften.

Statt einem Asbestkarton kann es sich auch um andere, nicht brennbare Kartonarten handeln, die beim Aufbiegen längs eingedrückter Falze leicht brechen.

Es ist klar, daß die in den Fig. 3a bis 3e aufgezeigten Beispiele für den Aufbau von karton- oder pappeartigen Flachmaterialien nicht erschöpfend sind.

Patentansprüche

1. Transportabler, in Längsrichtung offener oder geschlossener Kanalabschnitt mit hoher Feuersicherheit, insbesondere für Luftleitungen von Heizungs- und Klimaanlagen oder für Verkleidungen von Gebäudeinstallationen, dadurch gekennzeichnet, daß der Kanalabschnitt aus wenigstens einem länglichen, pappe- oder kartonartigen Flachmaterialzuschnitt mit oberflächlichen schmalen rillen- oder nutartigen Materialverformungen zur Bildung von Falzen mit biegeelastischen Materialeigenschaften zum Auffalten des Flachmaterialzuschnittes in die Gestalt des Kanalabschnittes oder einer Teilgestalt hiervon besteht.

2. Kanalabschnitt nach Anspruch 1, dadurch gekennzeichnet, daß die biegeelastischen Eigenschaften der Falze durch oberflächliche Pressungen, Kerbungen und/oder Ritzungen des Flachmaterials gebildet sind, die das strömungsmitteldichte Flachmaterial nicht durchdringen.

3. Kanalabschnitt nach Anspruch 1 und 2, dadurch gekennzeichnet, daß die biegeelastischen Eigenschaften der Falze durch nicht brennbare biegeelastische Fäden, Fasern, Bänder oder dünne Drähte gebildet oder gesichert sind, die quer zu den Falzen verlaufen und im festen Verbund mit dem Flachmaterial sind.

4. Kanalabschnitt nach Anspruch 3, dadurch gekennzeichnet, daß die biegeelastischen Fäden, Fasern, Bänder oder dünnen Drähte oder eine Kombination hiervon netz- oder gitterartig miteinander verbunden sind.

5. Kanalabschnitt nach Anspruch 4, dadurch gekennzeichnet, daß die biegeelastischen Netze oder Gitter im Flachmaterial eingebettet und/oder mit wenigstens einer Seite des Flachmaterials im festen Verbund sind.

6. Kanalabschnitt nach Anspruch 1 und 2, dadurch gekennzeichnet, daß die biegeelastischen Eigenschaften der Falze durch wenigstens eine nicht brennbare biegeelastische Folie gebildet oder gesichert ist, die im Flachmaterial eingebettet und/oder auf wenigstens einer Seite des Flachmaterials aufkaschiert ist.

7. Kanalabschnitt nach Anspruch 6, dadurch gekennzeichnet, daß die aufkaschierte Folie eine glatte strömungsmitteldichte Oberfläche mit einem niedrigen Strömungswiderstand aufweist.

8. Kanalabschnitt nach einem oder mehreren der vorstehenden Ansprüche 1 bis 7, dadurch gekennzeichnet, daß die biegeelastischen Eigenschaften der Falze durch oberflächliche Materialpressungen, -kerbungen und/oder -ritzungen in Kombination mit den biegeelastischen Fäden, Fasern, Bändern oder dünnen Drähten und/oder mit den biegeelastischen Folien gebildet sind.

9. Kanalabschnitt nach einem oder mehreren der vorstehenden Ansprüche 1 bis 7, dadurch gekennzeichnet, daß das gefaltete Flachmaterial entlang den Falzen Bruchkanten bildet, und daß die biegeelastischen Eigenschaften der Falze durch die biegeelastischen Fäden, Fasern, Bänder oder dünnen Drähte und/oder durch wenigstens eine elastische Folie gebildet sind.

10. Kanalabschnitt nach einem oder mehreren der vorstehenden Ansprüche, dadurch gekennzeichnet, daß der Flachmaterialzuschnitt wenigstens nahe seines einen Längsrandes eine Falz zum Falten eines schmalen Flachmateriallängsstreifens aufweist, der eine Befestigungsleiste zum Befestigen eines längsseitig offenen Kanalabschnittes an einer Wand oder eine Verbindungsleiste zum Verbinden mit einem Flachmaterialstreifen entlang der gegenüberliegenden anderen Längskante

- 3 -

des gleichen oder eines weiteren Flachmaterialteilzuschnittes bildet, um einen längsseitig geschlossenen Kanalabschnitt
zu schaffen.

11. Kanalabschnitt nach einem oder mehreren der vorstehenden
Ansprüche, dadurch gekennzeichnet, daß der Flachmaterialzuschnitt an wenigstens einem Längsende entlang mehreren
Falzen kurze Einschnitte besitzt, die bis zu in Querrichtung des Flachmaterialzuschnittes verlaufenden zusätzlichen
biegeelastischen Falzen zum Ausknicken von schmalen Flachmaterialstreifen als Fixierungsteile für die Ecken der
Kanalabschnitte und/oder als Verbindungsteile zum Verbinden
zweier benachbarter Kanalabschnitte reichen.

12. Kanalabschnitt nach Anspruch 11, dadurch gekennzeichnet,
daß ein steifer rahmenartiger, nicht brennbarer Flachmaterialkörper vorgesehen ist, der mit den Fixierungsteilen fest
verbunden ist.

13. Kanalabschnitt nach Anspruch 11 oder 12, dadurch gekennzeichnet, daß die Fixierungsteile und/oder der rahmenartige
Flachmaterialkörper zugleich Befestigungsmittel zum Befestigen eines oder mehrerer zusammenhängender Kanalabschnitte
an einer Gebäudewand oder Gebäudedecke sind.

14. Kanalabschnitt nach einem oder mehreren der vorstehenden
Ansprüche, dadurch gekennzeichnet, daß ein kurzer hülsenartiger Körper aus einem nicht brennbaren steifen Flachmaterial vorgesehen ist, der zur Aussteifung der Ecken
wenigstens eines Kanalabschnittes oder zur Aussteifung und
zur Verbindung zweier benachbarter Kanalabschnitte in den
oder die offenen Hohlräume der Kanalabschnitte satt eingreift.

15. Kanalabschnitt nach einem oder mehreren der vorstehenden Ansprüche, dadurch gekennzeichnet, daß auf wenigstens eine Seite des Flachmaterials eine nicht brennbare wärme- und/oder schallisolierende Filz- oder Wollschicht aus Metall-, Mineral- oder Kunststoffäden oder -fasern aufkaschiert ist.

16. Kanalabschnitt nach einem oder mehreren der vorstehenden Ansprüche, gekennzeichnet durch einen ersten länglichen Flachmaterialzuschnitt zur Bildung eines inneren Kanalabschnittes und einen zweiten länglichen Flachmaterialzuschnitt zur Bildung eines den inneren Kanalabschnitt wenigstens teilweise einschließenden äußeren Kanalabschnittes und einer Filz- oder Wollschicht, die den freien Zwischenraum zwischen dem inneren und dem äußeren Kanalabschnitt im wesentlichen ausfüllt.

17. Kanalabschnitt nach Anspruch 16, dadurch gekennzeichnet, daß die Woll- oder Filzschicht auf die Außenseite des inneren Kanalabschnittes und/oder die Innenseite des äußeren Kanalabschnittes aufkaschiert ist.

18. Kanalabschnitt nach einem oder mehreren der Ansprüche 15 bis 17, dadurch gekennzeichnet, daß mehrere ineinandergreifende Kanalabschnitte vorgesehen sind, die jeweils durch nicht brennbare Filz- oder Wollschichten voneinander getrennt sind.

FIG.1

FIG.2a  FIG.2b  FIG.2c  FIG.2d

FIG.2e  FIG.2f  FIG.2g  FIG.2i

FIG.2h

FIG. 3a

43  40  41

42

FIG. 3b

44

FIG. 3c

48

47  45  46

FIG. 3d

54  52

49  53  50  51

FIG. 3e

57  59

56

58